# DEMANDE DE BREVET EUROPEEN

(11) **EP 0 930 456 A1**
(43) Date de publication de la demande: **21.07.1999**
(21) Numéro de dépôt: 98470002.1
(22) Date de dépôt: 16.01.1998
(51) Int. Cl.: F16L 41/16, F16L 41/06

(54) **Collier de prise en charge**

(71) Demandeur: Société Huot, Société Anonyme, 55300 Saint Mihiel (FR)
(72) Inventeur: Dumez, Roger, 55300 Saint Mihiel (FR)
(74) Mandataire: Poupon, Michel

(57) **Abrégé**

L'invention a pour objet un collier de prise en charge (1) pour utilisation sur canalisations en toute matière, du type comprenant deux demi-parties (2,3) reliées mécaniquement et destinées à enserrer transversalement un tube de canalisation (9), caractérisé en ce qu'une des demi-parties (2) comporte une section robinet (8) à tournant sphérique, ladite section robinet (8) étant munie d'une sortie consistant en un raccord (6) pour tube plastique (10) et d'une entrée comportant un joint d'étanchéité (11).

L'invention est particulièrement destiné à une utilisation en prise perdue.

## Description

La présente invention a pour objet un nouveau collier de prise en charge pour une utilisation sur canalisations en toute matière.

Actuellement, la prise en charge, à savoir le branchement d'un particulier à partir d'une canalisation principale de distribution d'eau potable, s'effectue en utilisant un ensemble de pièces dissociées. Elle débute par le positionnement d'un collier de prise en charge sur un tube de canalisation puis par le vissage d'un robinet de prise en charge sur une partie filetée conformée à cet effet, du collier de prise en charge et ensuite en sortie de robinet, le montage d'un raccord pour tubes plastiques distribuant l'eau vers les habitations.

Ainsi, une prise en charge nécessite l' utilisation de différentes pièces rapportées assemblées par l' utilisateur sur chantier ce qui peut entraîner des risques de perte de l'une desdites pièces constitutives, d' incompatibilités des pièces entre-elles ou d'erreurs de manipulation par exemple un mauvais positionnement de pièces entre-elles à l'origine d'un forcèment des filetages des pièces aboutissant à des dysfonctionnements tels des fuites aux jonctions des éléments.

En outre, une multiplication des pièces constitutives oblige à avoir de nombreux compartiments de stockage.

Le but de l'invention est de remédier aux inconvénients tels qu'exposés ci-dessus.

Conformément à l'invention, on propose à cette fin un collier de prise en charge pour utilisation sur canalisations en toute matière, du type comprenant deux demi-parties reliées mécaniquement et destinées à enserrer transversalement un tube de canalisation, caractérisé en ce qu'une des demi-parties comporte une section robinet à tournant sphérique, ladite section robinet étant munie d'une sortie consistant en un raccord pour tube plastique et d'une entrée comportant un joint d' étanchéité.

Ainsi, le collier de prise en charge selon l'invention remplace avantageusement d'une seule pièce l'ensemble des pièces utilisées pour une prise en charge dans l'art antérieur.

On comprendra mieux l'invention à l'aide de la description faite ci-après d'un mode de mise en oeuvre donné à titre d'exemple non limitatif en référence aux dessins annexés dans lesquels :

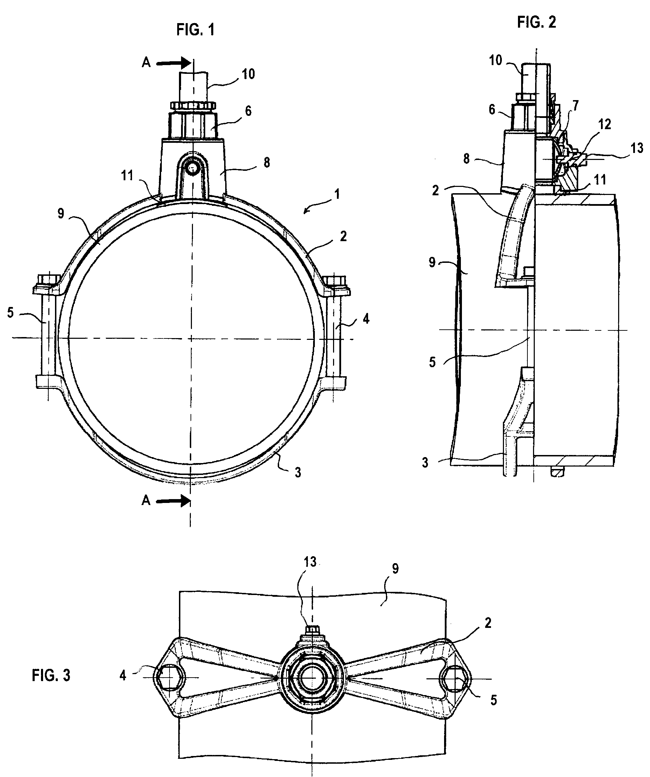

- la **figure 1** est une vue transversale d'un tube de canalisation sur lequel est monté un collier de prise en charge conforme à l' invention,
- la **figure 2** est une vue en demi-coupe suivant AA de la figure 1,
- la **figure 3** est une vue de dessus de la figure 1.

Le collier de prise en charge (1) se compose de deux demi-parties (2,3) reliées mécaniquement entre elles, par exemple par deux vis à tête hexagonale (4,5), pour délimiter un espace intérieur permettant le positionnement du collier transversal à l'axe longitudinal d'un tube de canalisation (9).

Le collier de prise en charge est dit "large plage". En effet, les deux vis (4,5) permettent de régler le collier en fonction du diamètre du tube de canalisation et de rapprocher les deux demi-parties (2,3) l'une vers l'autre pour le serrage du collier sur le tube (9).

Une des deux demi-parties du collier de prise en charge (1) comporte une section (8) s'étendant radialement vers l'extérieur à la zone de percement du tube de canalisation, ladite section radiale constituant le corps d'un robinet à tournant sphérique.

La sortie de la section robinet (8) est munie d' un raccord (6) pour tubes plastiques (10), en particulier pour tubes en polyéthylène de différents diamètres.

L'entrée de la section robinet comporte en outre en partie frontale un joint d' étanchéité (11), inséré dans le corps du collier, qui est compressé en appui contre la paroi extérieure du tube de canalisation (9) lors du serrage du collier (1) pour réaliser l'étanchéité tube (9)/collier (1).

La section robinet à tournant sphérique comporte une tige d' actionnement (12) de la sphère (7) avec une tête (13) s'étendant à l'extérieur du corps du robinet pour permettre l'ouverture et la fermeture dudit robinet à l'aide d'un outil (non représenté) apte à coopérer avec la tête (13) de la tige d' actionnement (12).

Le collier de prise en charge conforme à l'invention est particulièrement destiné à une utilisation en prise perdue à savoir à être enfoui sous terre sans accès à la tête (13) de robinet, ledit collier ne servant que pour une seule prise en charge à la mise en service du branchement.

## Revendications

1. Collier de prise en charge (1) pour utilisation sur canalisations en toute matière, du type comprenant deux demi-parties (2,3) reliées mécaniquement et destinées à enserrer transversalement un tube de canalisation (9), caractérisé en ce qu'une des demi-parties (2) comporte une section robinet (8) à tournant sphérique, ladite section robinet (8) étant munie d'une sortie consistant en un raccord (6) pour tube plastique (10) et d'une entrée comportant un joint d'étanchéité (11).
